# EUROPEAN PATENT APPLICATION

(11) **EP 3 991 886 A1**
(43) Date of publication of application: **04.05.2022**
(21) Application number: 20466004.7
(22) Date of filing: 26.11.2020
(51) Int. Cl.: B23B 27/10, B23B 27/16

(54) **CUTTING TOOL**

(30) Priority: 03.11.2020 CZ 20200594
(71) Applicant: Západoceská univerzita v Plzni, 301 00 Plzen (CZ)
(72) Inventor: Kroft, Lubos, 332 01 Tymakov (CZ); Sindelar, Ondrej, 301 00 Plzen (CZ)
(74) Representative: Polacek, Jiri

(57) **Abstract**

The invention is a cutting tool adapted for being clamped in a machine tool. The tool is provided with at least one cutting insert (D) affixed to a pocket (S) in a holder (N) of the cutting insert (D), where the holder (N) of the cutting insert (D) is provided with a cooling medium supply (P) and where a cooling clamp (U) may be fitted freely to the holder (N) of the cutting insert (D) and is provided with at least one channel (K) which carries the cooling medium, where the outlet (V) of the channel (K) of the cooling clamp (U) is directed toward the face of the cutting insert (D). On the holder (N) which is provided with a lower-positioned cutting fluid supply (P'), a supplementary cooling clamp (T) may be fitted below the pocket (S) and provided with at least one channel (K'), the cooling medium outlet (V') of which is directed at the flank of the cutting insert (D).

## Description

### Field of the Invention

The invention relates to a cutting tool which is adapted for being clamped in a machine tool and has at least one cutting insert affixed to a cutting insert pocket in a cutting insert holder which is provided with a coolant supply, where a cooling clamp may be attached to the cutting insert holder, this cooling clamp having at least one channel to carry the coolant where the outlet of the cooling clamp channel is directed at the cutting insert face.

### Background Art

Turning of a majority of ordinary structural materials by tools with exchangeable cutting inserts requires cooling/lubrication to be applied during the cutting process. The poorer are the physical and chemical properties of the workpiece with respect to its machinability, the greater is the importance of cooling, while heat is generated during cutting due to friction between the tool surfaces and the workpiece and due to plastic deformation in chip formation. Heat dissipation plays a key role in the tool durability and in the quality of the machined surface, primarily in terms of surface integrity. The cooling system is beneficial in terms of cutting itself but also in terms of lubrication, cleaning and other effects.

The medium, normally a liquid, is supplied at a standard or increased pressure, the latter being referred to in industrial practice as high-pressure cooling which facilitates better penetration of the liquid to the chip-cutting edge interface. Background art includes a solution for cooling a turning tool with a liquid, where one variant involves internal cooling wherein the coolant is fed via a spindle or a turret of the machine tool and through a system of passages in the tool to the tool's cutting parts, often via openings in the recesses for chips, wherefrom the process medium is delivered directly to the tool tip and the cutting edge, typically through openings in an exchangeable insert holder, so that it is directed precisely to the cutting edge and to the cut.

For instance, there are turning tool holders, in which cooling channels in various configurations are oriented toward the cut via nozzles whose direction can be set toward the tool face and which are affixed to the tool body by a threaded joint. Their fundamental drawbacks include the distance between the outlet and the cut and the limited variability of the direction of face cooling with respect to the actually engaged portion of the cutting edge. Another problematic aspect is the relatively complicated manufacture of cooling channels in tool holders which involves labour-intensive boring or electrical discharge machining of very deep holes with relatively small diameters. Such procedures are very costly, and even then, the coolant is often delivered to the cutting inserts in a suboptimal fashion.

Patent no. CZ303363 describes a chip cutting tool which is provided with at least one central internal hole for supplying the cooling or lubrication medium and whose minor or major flank has near the cutting edge at least one channel in fluid communication for supplying the cooling or lubrication medium where the channel communicates with a distribution channel. A groove connects to the channel in fluid communication on the major and/or minor flank. On the face near the cutting edge, the tool may be provided with at least one additional channel for supplying the cooling or lubrication medium.

Patent no. US9511421 discloses a cutting tool with a clamp assembly which can be fitted to a cutting tool holder. The tool holder is adapted for clamping and inserting an exchangeable cutting insert. The coolant from a reservoir is directed via a recess in the clamping assembly via which the coolant from the coolant source enters an outlet and is directed toward the cutting tool face.

Patent no. US10300532 discloses a cutting tool comprising a holder adapted for clamping a cutting insert, where the cutting insert is affixed to the holder with a screw extending through a hole in the centre of the cutting insert. A cylindrical cooling clamp can be fitted to the holder where the cooling clamp is tube-shaped with a nose where the nose clamps a tool in the holder and distributes coolant via internal channels onto the face of the cutting insert. Analogous cutting tool solutions are disclosed in EP3167985 and US8529162.

The above solutions focus on cooling the face of the cutting insert in order to reduce the tool wear, i.e. to increase the durability and to extend the life of the face of cutting inserts. The drawbacks of these solutions are in that in cases where cooling of the cutting insert only concentrates on the cutting insert face, the cutting edge of the cutting insert suffers severe wear in the flank region or that the cutting tool flank is only cooled at a point by the coolant from the holder. This poses a limitation to the use of the cutting tool for a wide range of machining processes.

### Disclosure of Invention

The invention relates to a cutting tool which is adapted for being clamped in a machine tool, the cutting tool having at least one cutting insert affixed to a cutting insert pocket in a cutting insert holder where the cutting insert holder is configured for cooling medium supply and a cooling clamp may be fitted to the cutting insert holder, this cooling clamp having at least one channel for carrying the cooling medium and the outlet of the cooling clamp channel is directed at the cutting insert face. To the holder which is provided with a lower-positioned cutting fluid supply, a supplementary cooling clamp may be fitted below the pocket, where the clamp is provided with at least one channel, the cooling medium outlet of which is directed at the cutting insert flank. The use of the supplementary cooling clamp leads to substantially less splashing and to considerably smaller pressure losses and volume losses between the coolant outlet from the channels and the cutting edge of the cutting tool being cooled. The cooling of both the face and flank of the cutting insert significantly increases the cutting performance of the tool because the wear in the cutting edge is reduced due to purposeful and precisely directed cooling on the entire cutting edge of the tool.

It is advantageous when the supplementary cooling clamp, which may be fitted, is replaceable, not only for improving the reliability of the tool owing to mechanical damage to the supplementary cooling clamp, for instance, but mainly for modularity of the supplementary clamps with respect to various shapes, dimensions and materials of cutting inserts.

It is also advantageous when the channel of the supplementary cooling clamp becomes narrower toward the outlet, the narrowing profile securing the required cooling intensity by directing the cutting fluid flow or by increasing the coolant pressure. In a preferred embodiment, pressure is increased by providing the channel with a narrower section in the form of an orifice plate.

It is also advantageous when the supplementary cooling clamp is provided with two or more channels whose axes are parallel. By increasing the number of channels, cooling along the entire cutting edge is achieved more easily, where the axes of the channels are parallel, a constant cooling intensity on the cutting edge is achieved, most notably in cooling exchangeable cutting inserts which are not round in shape.

It is also advantageous when the channels of the supplementary cooling clamp are directed to the locations of chip removal on the workpiece. This configuration provides highly effective cooling of the cutting edge, namely in cooling round-shaped exchangeable cutting inserts where axes of individual channels are non-parallel or the channel diameters are different.

### Description of drawings

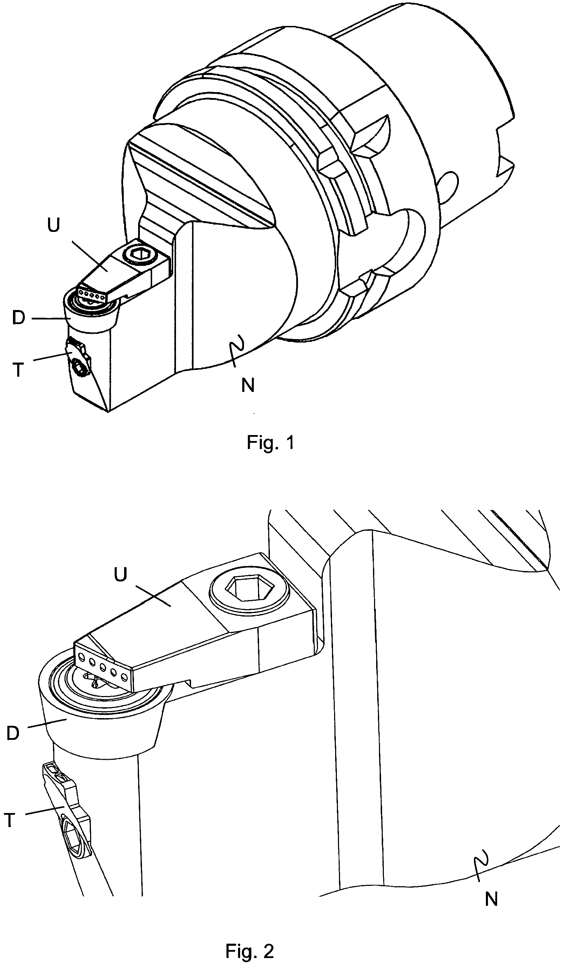

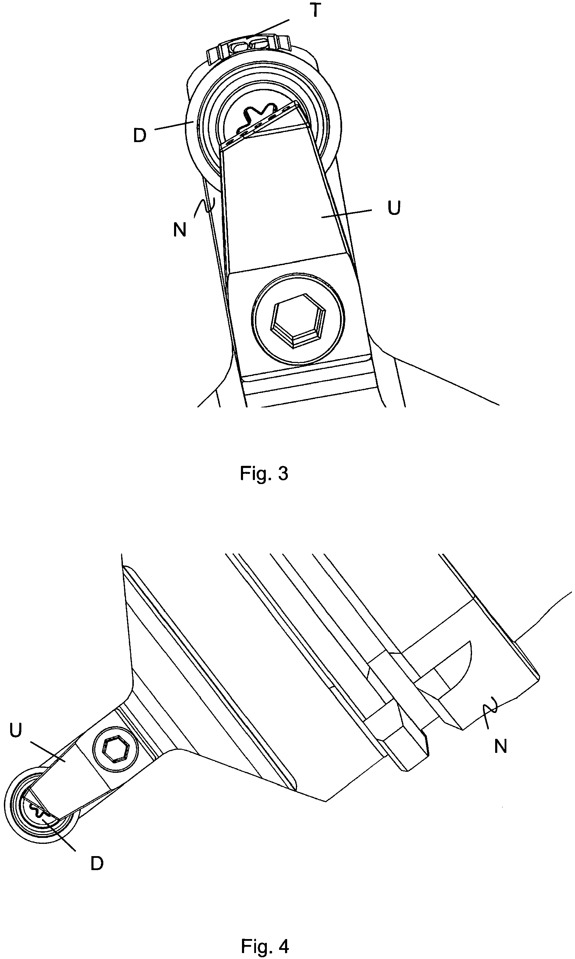

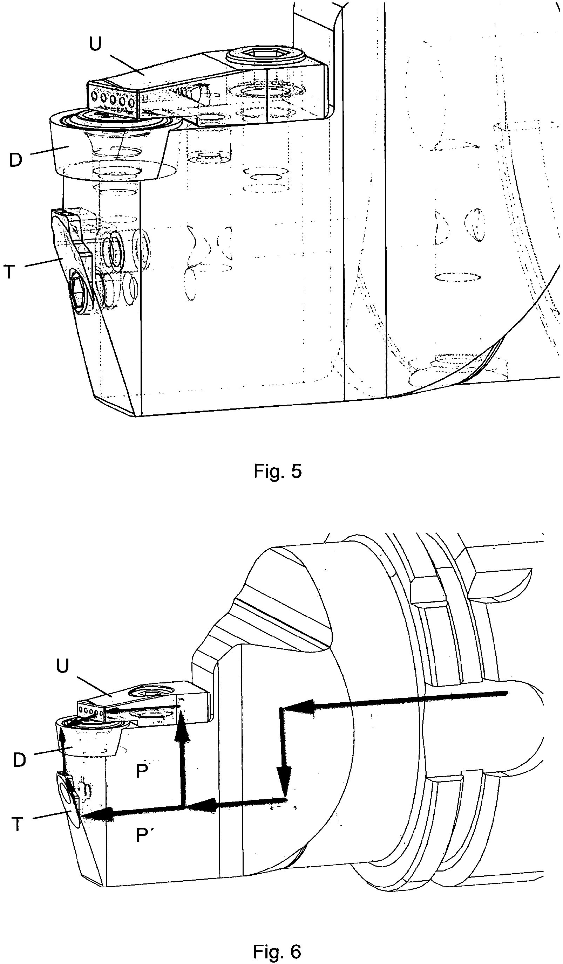

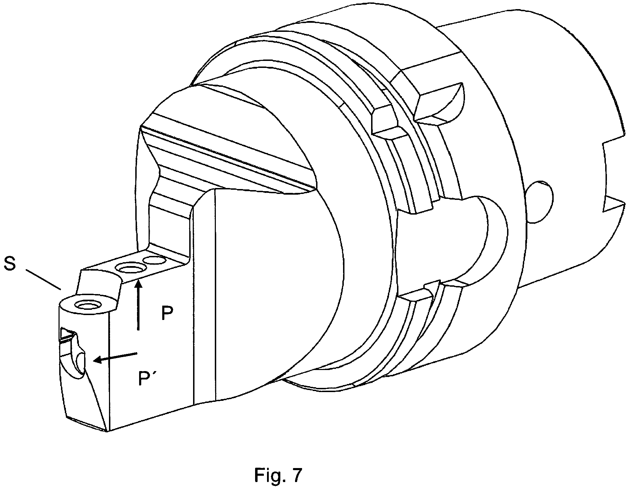

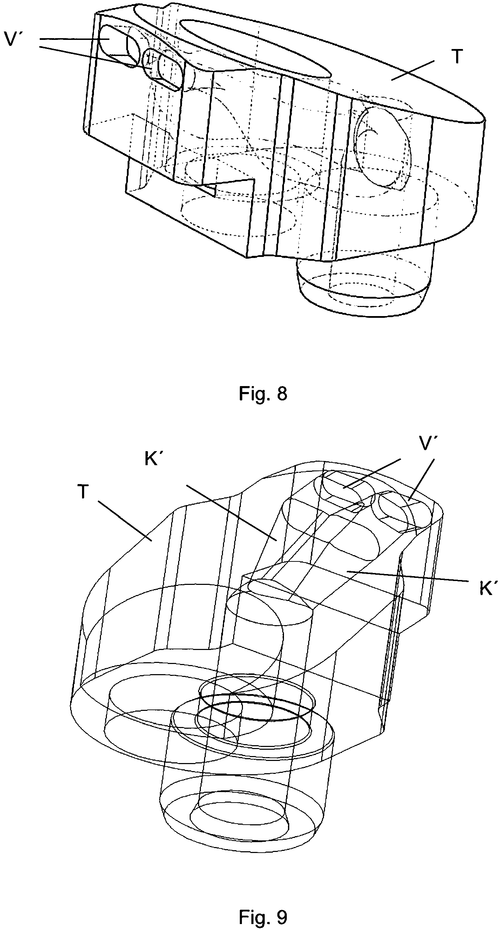

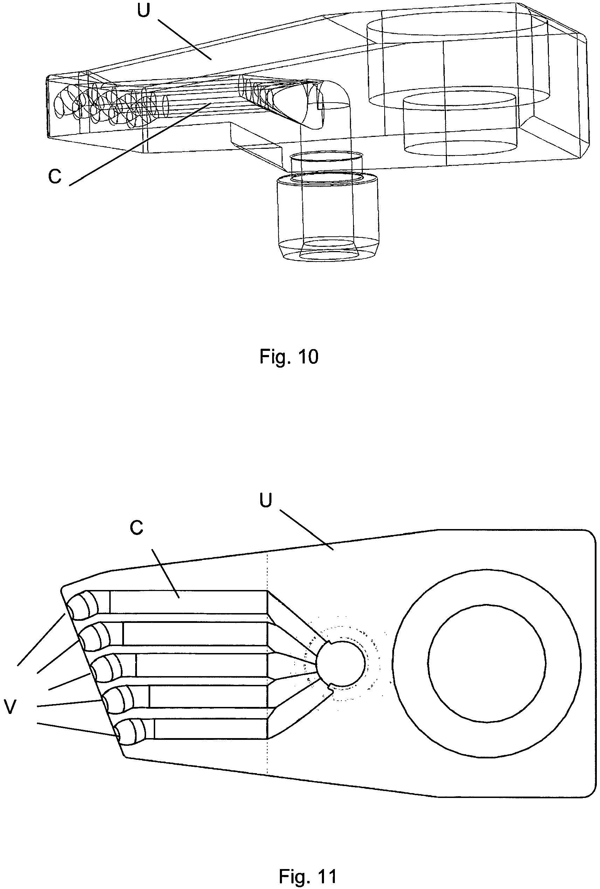

A general isometric view of the tool is shown in Fig. 1 and Fig. 2; Fig. 3 and Fig. 4 show plan views of the cutting tool. Fig. 5 shows an isometric view of the cutting tool and an outline of the cutting insert cooling system; Fig. 6 is an isometric view of the cutting tool and shows the arrangement of a cooling system with indications of controlled flow of a cooling medium onto the face and flank of the tool; Fig. 7 is a general isometric view of the tool without the cooling clamp and supplementary cooling clamp and without an exchangeable cutting insert. Fig. 8 is an isometric view of a supplementary cooling clamp including the arrangement of the channels; Fig. 10 is an isometric view of a cooling clamp including the arrangement of the channels; Fig. 11 is a plan view of the cooling clamp including the arrangement of the channels; Fig. 12 is a plot of the relationship between cutting insert flank wear and the time of engagement. Fig. 13 is a bar chart based on experiments which indicates the mean life of the tool for variants with face cooling and face and flank cooling according to the present invention; Fig. 14 compares the life of both tools tested at increased cutting speeds. Fig. 15 shows the actual wear of a cutting part of a tool with cutting insert cooling directed only at the cutting insert face based on the above experiment performed with a coolant pressure of 10 bar; Fig. 16 shows wear on the cutting part of a tool when cutting insert cooling is directed at both face and flank of the insert based on the above experiment performed at coolant pressure of 10 bar and according to the present invention.

### Description of example embodiment

The cutting tool is adapted for being clamped in a spindle head and is intended primarily for rough machining materials in ISO M and S groups. The tool comprises a round exchangeable cutting insert D, where the insert D is affixed in pocket S of holder N by a screw which extends through insert D. Pocket S is provided in holder N of the cutting insert D. The holder N of cutting insert D is provided with a coolant supply P. Using a screw, cooling clamp U may be fitted freely to the holder N of cutting insert D and clamps the round exchangeable cutting insert D and supplies cooling medium to the face of the cutting insert D. Cooling clamp U is provided with a system of internal channels K, through which the cooling medium passes. Outlets V from the channels K of the cooling clamp U are directed at the face of the cutting insert D. Holder N is provided with a lower-positioned supply P' of cutting fluid. Below the pocket S a supplementary cooling clamp T may be fitted. Cooling clamp T has a system of non-linear channels K' the outlets V' from which direct the coolant on the flank of the cutting insert D. Supplementary cooling clamp T is replaceable and may be attached to holder N with a screw which extends through the body of the supplementary cooling clamp T into an internal-threaded hole in the holder N. Channels K' in the supplementary cooling clamp T become narrower toward their outlets V' and in this particular embodiment, the channels K' have a round cross-section. Axes of channels K' in this embodiment are non-parallel. Channels K' are directed at locations of chip removal on the workpiece.

Supply passages P and P' of cooling medium to the holder N distribute the cooling medium through channels K and K' of cooling clamp U and supplementary cooling clamp T, where the narrowed ends of these channels K and K' direct the cooling medium toward both the face of the cutting insert D and the flank of the cutting insert D.

The effectiveness of the modification of the cutting tool was verified experimentally in order to compare the effects of various arrangements of cutting fluid supply to the location of the cut and the pressures of these fluids in rough longitudinal turning of a Ti-6AI-4V round bar for the existing configuration of tools with only face cooling of the cutting insert D and cutting tools according to the invention with cooling of both face and flank of the cutting insert D.

The parameter under investigation and evaluation was the life of the tool (in minutes) where the life was evaluated on the basis of maximum flank wear indicated as VBmax (examining the face wear is of no use in this case, as almost all wear occurs on the flank portion of the cutting insert), after which the critical value was found: VB_{crit} = 0.3 mm, i.e. the limit value at which testing had to be stopped. The value VB_{crit} = 0.3 mm was chosen with respect to the potential wear limit on the cutting insert up to which the tool can perform cutting reliably.

One side of the workpiece was clamped in hard jaws of a universal chuck and the other was held by a live centre. The useful length of the turning tool travel was set at 490 mm, where the length of the clamping section and a safety distance were subtracted from 500 mm. The tool is clamped in a spindle head. The angle with respect to the workpiece axis is 45°. The longitudinal turning direction was conventional - toward the spindle.

The cutting conditions were set on the basis of verified and proven values. The conditions were constant throughout the tests.

Cutting conditions:
• v_{c} = 90 [m.min-1]
• f = 0.25 [rev.min-1]
• aₚ = 2 [mm]

**Tab. 1 - Example of recorded engagement times, wear and experimental runs**

| **Cooling - face + flank - 100 bar** | | | | | |
|---|---|---|---|---|---|
| Test run no. 1 | | Test run no. 2 | | Test run no. 3 | |
| Engagement time [min] | Wear [µm] | Engagement time [min] | Wear [µm] | Engagement time [min] | Wear [µm] |
| 2.49 | 130 | 2.43 | 120 | 2.32 | 150 |
| 4.97 | 150 | 5.77 | 160 | 4.64 | 180 |
| 8.45 | 200 | 8.15 | 180 | 6.95 | 200 |
| 10.88 | 220 | 10.52 | 200 | 9.04 | 240 |
| 13.31 | 250 | 12.9 | 230 | 11.3 | 280 |
| 15.74 | 280 | 15.03 | 260 | 12.43 | 290 |
| 16.95 | 300 | 17.35 | 300 | | |

The experiment confirmed the premises on which the present design solution was based, involving the cooling of both face and flank of cutting insert D, the premises being as follows:
- the cutting fluid which is also directed at the cutting insert D flank has a significantly positive impact on the tool life
- cooling of the effective cutting portion of the flank of cutting insert D leads to a significantly more uniform wear on the cutting insert D and a slower increase in wear - the linear portion in the wear graph becomes longer
- directing the high-pressure cutting fluid on the face of an exchangeable cutting insert D produced a very favourable chip shape - a parameter under comparison

The average life for all the alternatives under measurement which only used the arrangement for cooling of the face of the cutting insert D only reached 80% of the mean value for the alternative with combined cooling of cutting insert D according to the invention, i.e. cooling of both face and flank.

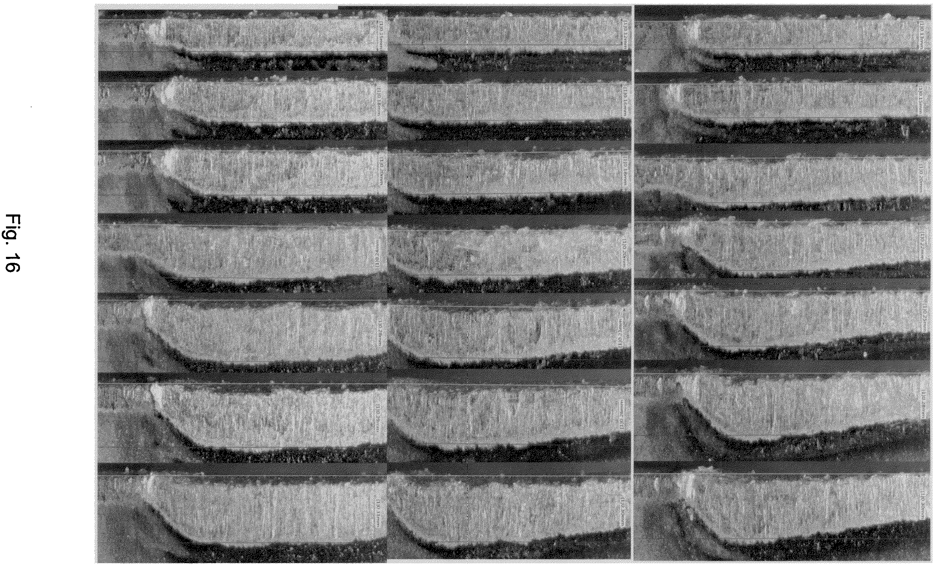

Based on these results, one can identify the single most important factor, which is the cooling technology or method. Micrographs taken during testing of variants with combined cooling, i.e. both face and flank cooling, as shown in Fig. 16, reveal that the cutting edge of the cutting insert D exhibits relatively uniform wear, which is evidence of the added value of this design configuration in terms of predictability of the cutting process.

In the next step, comparison was made with the cooling alternative which only involved the face of cutting insert D. All the machine equipment, cutting fluid, workpiece and tools were identical in this experiment. In the previous part of the experiment, the cutting conditions (v_{c}, f, aₚ) were set as a single-level factor. It was therefore impossible to determine how the tools may respond to changes in cutting speed, which has the strongest impact on tool life from all the cutting parameters. In order to fully exploit the potential of a tool, it is advantageous to identify its limits and thus find the extreme parameters which a production engineer should respect in determining the cutting conditions. The reasons for respecting the limiting criteria are of both engineering and economic nature.

The goal of this experiment was to compare both tool variants (the same types as in the first experiment) at cutting speeds approaching the possible maximum for the design variant and the cutting conditions. Based on previous experience, two additional cutting speeds were chosen, increased in steps of 20 [m/min], i.e. to 110 [m/min] and 130 [m/min]. In the experiment, it was found that the cutting speed of 130 [m/min] caused a wear so severe that it was impossible to obtain meaningful evaluation of the experiment, and therefore this speed was excluded from the evaluation. The reason was that it was not a limit dictated by the tool but by the type of the cutting insert D - which was not the purpose of this experiment.

Cutting conditions:
f = 0.25 [rev.min⁻¹]
aₚ = 2 [mm]
v_{c} = 110 [m/min]

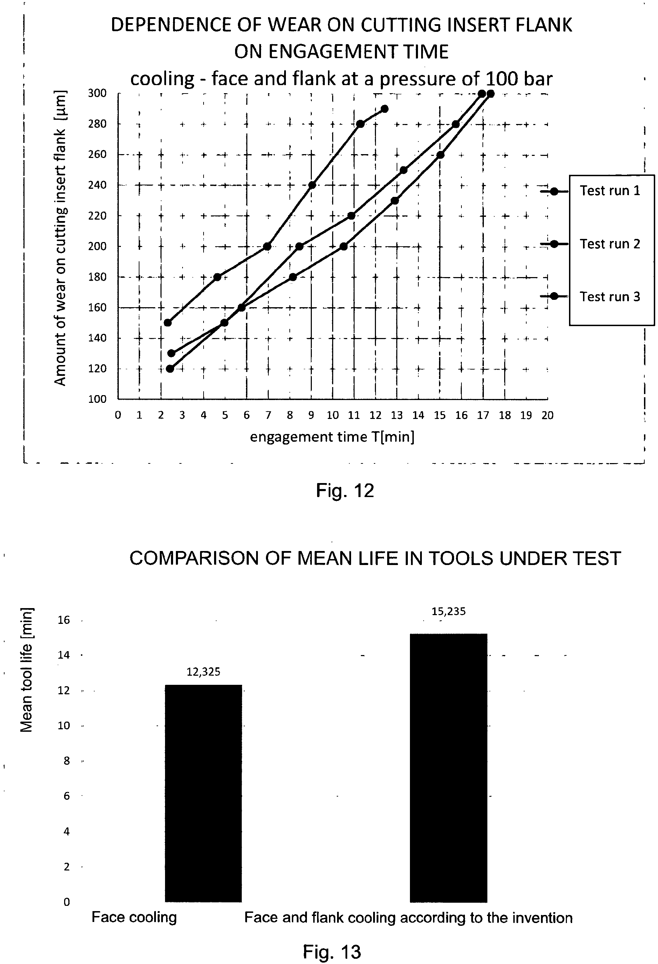

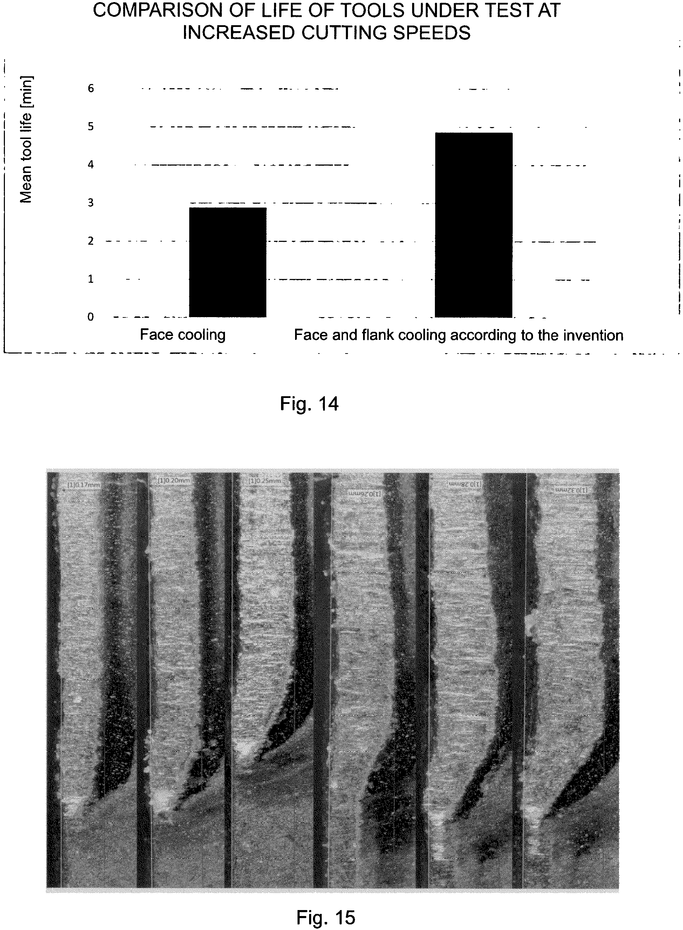

Based on the results demonstrated in Fig. 12 through Fig. 16, one can assume that with increasing cutting speed the differences in tool life increase significantly, at least in the first stage. Hence, the effect of a significantly more effective cooling is stronger here. At cutting speed v_{c} = 110 [m/min], the tool with the cooling clamp, i.e. with cooling only the cutting insert face, showed a life of 2.88 minutes, whereas the tool according to the invention showed a life of 4.86 minutes, i.e. 69% longer tool life according to the present invention. In this part of the experiment, the rationale was to increase the cutting speed and thus approach the limits of the cutting insert D.

It was found that at higher cutting speeds (v_{c} = 110 [m/min], as opposed to the original v_{c} = 90 [m/min]), the extreme temperatures generated during cutting dramatically reduced the life of the tool, which is in line with machining theory. When lifetimes of both tool types are compared under these conditions, the tool with cooling clamp U and supplementary cooling clamp T achieved 69% longer life than the conventional tool with cooling clamp U, which was only directed toward the face of cutting insert D.

### Industrial Applicability

The tool disclosed according to this invention finds use in the design of chip cutting tools.

## Claims

1. A cutting tool adapted for being clamped in a machine tool and provided with at least one cutting insert (D) affixed to a pocket (S) in a holder (N) of the cutting insert (D), where the holder (N) of the cutting insert (D) is provided with a cooling medium supply (P), and where a cooling clamp (U) may be fitted to the holder (N) of the cutting insert (D) and is provided with at least one channel (K) which carries the cooling medium, where the outlet (V) of the channel (K) of the cooling clamp (U) is directed toward the face of the cutting insert (D) **characterized in that** on the holder (N) which is provided with a lower-positioned cutting fluid supply (P') a supplementary cooling clamp (T) may be fitted below the pocket (S), being provided with at least one channel (K'), whose outlet (V') of coolant is directed at the flank of the cutting insert (D).

2. The cutting tool according to claim 1 **characterized in that** the supplementary cooling clamp (T) is replaceable.

3. The cutting tool according to claim 1 **characterized in that** the channel (K') of the supplementary cooling clamp (T) becomes narrower toward the outlet (V').

4. The cutting tool according to claims 1, 2 or 3 **characterized in that** the supplementary cooling clamp (T) is provided with at least two channels (K') whose axes are parallel.

5. The cutting tool according to claims 1, 2, 3, 4 or 5 **characterized in that** the channels (K') are purposefully directed toward chip removal locations on the workpiece.
